# EUROPÄISCHE PATENTSCHRIFT

(11) **EP 2 850 783 B1**
(45) Veröffentlichungstag und Bekanntmachung des Hinweises auf die Patenterteilung: **31.08.2016**
(21) Anmeldenummer: 13718791.0
(22) Anmeldetag: 30.04.2013
(51) Int. Cl.: H04L 12/40, H04L 29/12

(54) **BUSTEILNEHMER FÜR EIN BUSSYSTEM, BUSSYSTEM FÜR EINEN KRAFTWAGEN SOWIE EIN VERFAHREN ZUR ZUORDNUNG VON ADRESSEN IN EINEM BUSSYSTEM**
BUS SUBSCRIBER FOR A BUS SYSTEM, BUS SYSTEM FOR A MOTOR VEHICLE, AND METHOD FOR ALLOCATING ADDRESSES IN A BUS SYSTEM
CIRCUIT UTILISATEUR POUR SYSTÈME DE BUS, SYSTÈME DE BUS POUR VÉHICULE AUTOMOBILE ET PROCÉDÉ D'ALLOCATION D'ADRESSES DANS UN SYSTÈME DE BUS

(30) Priorität: 15.05.2012 DE 102012009630
(43) Veröffentlichungstag der Anmeldung: 25.03.2015
(73) Patentinhaber: Audi AG, 85045 Ingolstadt (DE)
(72) Erfinder: KRELL, Stephan, 91161 Hilpoltstein (DE); GOETZE, Wolfgang, 97616 Bad Neustadt (DE)
(74) Vertreter: Brandt, Kai
(86) Internationale Anmeldenummer: PCT/EP2013/001286
(87) Internationale Veröffentlichungsnummer: WO 2013/170929

(56) Entgegenhaltungen:
- EP-A1- 2 154 831
- EP-A2- 1 139 609
- DE-A1-102007 041 941
- DE-A1-102009 002 867
- US-A- 4 538 262
- US-A1- 2003 201 882
- US-A1- 2005 154 474

## Beschreibung

Die Erfindung betrifft einen Busteilnehmer für ein Bussystem gemäß dem Oberbegriff des Patentanspruchs 1, ein Bussystem für einen Kraftwagen gemäß dem Oberbegriff des Patentanspruchs 3 sowie ein Verfahren zur Zuordnung von Adressen in einem Bussystem gemäß dem Oberbegriff des Patentanspruchs 5.

Busteilnehmer für ein Bussystem, Bussysteme sowie Verfahren zur Zuordnung von Adressen in einem Bussystem sind beispielsweise aus dem Serienbau von Kraftwagen sowie aus dem allgemeinen Stand der Technik hinlänglich bekannt. Ein solches Bussystem dient zur Datenübertragung zwischen mehreren Busteilnehmern über einen gemeinsamen Übertragungsweg, bei dem die Teilnehmer nicht an der Datenübertragung zwischen anderen Teilnehmern beteiligt sind.

Bussysteme finden insbesondere Anwendung in Kraftwagen zur Verbindung einzelner, elektronischer Busteilnehmer in Form von Steuergeräten, welche beispielsweise jeweilige Stellglieder des Kraftwagens ansteuern. Damit die Busteilnehmer Daten miteinander austauschen und somit miteinander kommunizieren können, sind sie beispielsweise mittels wenigstens eines Leitungselements miteinander verbunden.

Ein solches Leitungselement kann einen oder mehrere Metalldrähte umfassen, die mit einer Hülse insbesondere aus Kunststoff ummantelt sind. Zwischen den Busteilnehmern zu übertragende Signale und somit Daten, welche auch als Botschaften bezeichnet werden, werden mittels Spannungsunterschieden weitergegeben und beispielsweise durch ein Protokoll verschlüsselt oder entschlüsselt. Zur Gewährleistung einer fehlerfreien Kommunikation benötigen die Busteilnehmer am Bussystem eine jeweilige, eindeutige Adresse, sodass jeder Busteilnehmer eindeutig identifiziert werden kann.

Die Vergabe der Adressen für die Busteilnehmer wird auch als Codierung bezeichnet. Zur automatischen Adressvergabe besteht beispielsweise die Möglichkeit, an jedem Busteilnehmer das Bussystem zu trennen und Nachrichten, d. h. die Signale nur bedingt weiterzugeben oder elektrische Messungen durchzuführen. Dies führt zu einem hohen Verkabelungsaufwand sowie zu einer hohen Fehleranfälligkeit. Alternativ kann zur Durchführung der Adressvergabe ein separater Draht verwendet und verlegt werden. Auch sind aus dem allgemeinen Stand der Technik Verfahren bekannt, bei denen zusätzliche Kontakte eines Steckers der Busteilnehmer unterschiedlich belegt sind oder im Stecker passive Bauelemente verbaut sind.

Der DE 101 23 802 B4 ist es als bekannt zu entnehmen, eine solche Codierung beispielsweise durch EEPROM oder durch Steckercodierungen zu realisieren. Darüber hinaus ist der DE 101 23 802 B4 ein Steuerungssystem zur Steuerung von elektronisch ansteuerbaren Kraftfahrzeugkomponenten als bekannt zu entnehmen. Das Steuerungssystem umfasst ein Eindraht-BusSystem mit mindestens einer übergeordneten Steuereinrichtung mit mindesten zwei weiteren Teilnehmern, die jeweils zumindest einer Kraftfahrzeugkomponente zugeordnet sind. Dabei sind die übergeordnete Steuereinrichtung und die weiteren Teilnehmer über einen Bus miteinander verbunden, der mindestens zwei Datenleitungen umfasst. Es ist wenigstens eine Schaltvorrichtung vorgesehen, die von der übergeordneten Steuereinheit gesteuert wird und durch die jeder der mindestens zwei weiteren Teilnehmer wahlweise gezielt einzeln ab- oder zugeschaltet werden kann.

Die EP 1 139 609 A2 offenbart ein Bussystem mit mehreren Busteilnehmern, wobei jeder Busteilnehmer an wenigstens zwei Anschlussleitungen angeschlossen ist. Dabei ist vorgesehen, dass jedem Busteilnehmer ein elektronisches Schaltungsteil zugeordnet ist. Das Schaltungsteil ist in unterschiedlichen Anschlusskombinationen mit den Anschlussleitungen verbindbar. Das Anschlussteil erkennt die jeweilige Anschlusskombination der angeschlossenen Anschlussleitungen und codiert abhängig von der erkannten Anschlusskombination den Busteilnehmer.

Aus der US 2005/015474 A1 ist ein Sensorelement für ein Bussystem in einem Kraftfahrzeug bekannt. Das Sensorelement weist eine erste Anzahl an Kontaktanschlüssen auf, über die das Sensorelement an die verschiedene Potenziale aufweisenden Busleitungen des Bussystem anschließbar ist. Dabei ist es vorgesehen, dass die erste Anzahl größer als die Anzahl der Busleitungen ist. Ferner ist eine erste Einrichtung vorgesehen, die das Potenzial an mindestens einem der Kontaktanschlüsse misst und auswertet. Des Weiteren ist eine zweite Einrichtung vorgesehen, die dem Sensorelement aus dem gemessenen und ausgewerteten Potenzial in eine spezifische Adresscodierung zuweist.

Der US 2003/0201882 A1 ist ein adressierbares Überwachungssystem als bekannt zu entnehmen. Das Überwachungssystem umfasst eine Mehrzahl von Sensoren. Jeder der Sensoren ist mit einem Kabelbaum verbindbar, welcher vier Leitungen umfasst. Über Kontakte kann der jeweilige Sensor mit den Leitungen verbunden werden. Je nach Verbindungszustand zweier dieser Kontakte kann der jeweilige Sensor seine eigene Adresse bestimmen.

Schließlich offenbart die US 4 538 262 einen Busteilnehmer mit Kontakten, über die der Busteilnehmer mit Leitungen eines Bussystems verbunden werden kann. In Abhängigkeit von einem jeweiligen Verbindungszustand der Kontakte mit den Leitungen kann eine Adresse für den Busteilnehmer vergeben werden.

Der DE 103 54 602 A1 ist ein Bussystem für einen Kraftwagen als bekannt zu entnehmen, welches wenigstens zwei Busteilnehmer umfasst. Das Bussystem umfasst wenigstens eine Datenleitung als erste Leitung, wenigstens eine Spannungsversorgungsleitung als zweite Leitung und wenigstens eine Masseleitung als dritte Leitung. Die Busteilnehmer weisen ferner jeweils zumindest ein Anschlusselement auf, welches wenigstens zwei Kontakte umfasst. Die Kontakte sind jeweils mit einer der Leitungen verbindbar.

Ein erster der Kontakte ist ein Spannungsanschluss, welcher an die Spannungsversorgungsleitung angeschlossen werden kann. Der zweite Kontakt ist ein Datenkommunikationsanschluss, welcher an die Datenleitung angeschlossen werden kann. Das jeweilige Anschlusselement umfasst ferner einen dritten Kontakt, welcher ein Masseanschluss ist und an die Massenleitung angeschlossen werden kann. Darüber hinaus ist ein vierter Kontakt des jeweiligen Anschlusselements vorgesehen, welcher ein Konfigurationsanschluss ist.

Der Konfigurationsanschluss dient zur Adressvergabe des Busteilnehmers, das heißt zur Codierung. Der Konfigurationsanschluss kann dabei an die Spannungsversorgungsleitung oder an die Datenleitung oder an die Masseleitung angeschlossen oder offen sein, so dass vier Zustände und somit vier Adressmöglichkeiten gegeben sind. Das Vorsehen dieses zusätzlichen Konfigurationsanschlusses führt zu einem relativ hohen Verkabelungsaufwand des Busteilnehmers und somit des Bussystems.

Es ist daher Aufgabe der vorliegenden Erfindung, einen Busteilnehmer, ein Bussystem sowie ein Verfahren zur Zuordnung von Adressen in einem Bussystem bereitzustellen, welche eine besonders einfache Adressvergabe ermöglichen.

Diese Aufgabe wird durch einen Busteilnehmer mit dem Merkmal des Patentanspruchs 1, durch ein Bussystem mit den Merkmalen des Patentanspruchs 3 sowie durch ein Verfahren mit den Merkmalen des Patentanspruchs 5 gelöst. Vorteilhafte Ausgestaltungen mit zweckmäßigen und nichttrivialen Weiterbildungen der Erfindung sind in den übrigen Ansprüchen angegeben.

Der erste Aspekt der Erfindung betrifft einen Busteilnehmer für ein wenigstens zwei Leitungen aufweisendes Bussystem. Der Busteilnehmer umfasst zumindest ein Anschlusselement, welches wenigstens zwei Kontakte aufweist. Die Kontakte sind jeweils mit einer der Leitungen verbindbar.

Zur Realisierung einer einfachen Adressvergabe für den Busteilnehmer im Bussystem sowie zur einfachen und kostengünstigen Realisierung einer hohen Anzahl an Adressmöglichkeiten ist eine Adressvergabeeinrichtung des Busteilnehmers vorgesehen, mittels welcher in Abhängigkeit von einem jeweiligen Verbindungszustand beider Kontakte mit den Leitungen eine Adresse des Busteilnehmers im Bussystem ermittelbar ist. Durch die Auswertung des Verbindungszustands beider Kontakte ist es möglich, mit einer nur sehr geringen Anzahl an Leitungen des Bussystems sowie mit einer nur sehr geringen Anzahl an Kontakten des Busteilnehmers eine sehr hohe Anzahl an Kombinationsmöglichkeiten und somit eine sehr hohe Anzahl an Adressmöglichkeiten und somit an unterschiedlichen Adressen zu realisieren, indem die Kontakte bzw. ihr Verbindungszustand mit den Leitungen variiert werden bzw. wird. Dadurch können insbesondere der Verkabelungsaufwand und somit die Kosten des Busteilnehmers gering gehalten werden.

Je nach Verbindungszustand der Kontakte ergeben sich entsprechende elektrische Potential- bzw. Spannungsverhältnisse zwischen den Kontakten, wodurch die entsprechende Adresse des Busteilnehmers ermittelt und somit die Codierung durchgeführt werden kann. Die Kontakte können dabei an unterschiedliche oder dieselbe Leitung des Bussystems angeschlossen sein. Ebenso ist es möglich, dass einer der Kontakte an eine der Leitungen angeschlossen und der andere Kontakt offen ist. Beispielsweise ist es auch möglich, dass beide Kontakte offen, das heißt nicht an eine Leitung angeschlossen sind.

Zur Realisierung einer noch größeren Anzahl an Adressmöglichkeiten kann das Anschlusselement eine noch höhere Anzahl an Kontakten, d.h. wenigstens drei Kontakte aufweisen, wobei mittels der Adressvergabeeinrichtung die Adresse des Busteilnehmers in Abhängigkeit von einem jeweiligen Verbindungszustand dieser wenigstens drei Kontakte ermittelbar ist. Alternativ oder zusätzlich ist es möglich, dass das Bussystem eine höhere Anzahl an Leitungen, d.h. wenigstens drei Leitungen aufweist, mit denen die Kontakte des Anschlusselements verbindbar sind. Auch dadurch kann eine sehr hohe Anzahl an Adressmöglichkeiten auf einfache Weise realisiert werden.

Eine erste der Leitungen des Bussystems ist beispielsweise eine Masseleitung, überwelche der Busteilnehmer mit der Masse verbindbar ist. Die zweite Leitung kann eine Spannungsversorgungsleitung sein, über die der Busteilnehmer mit einer Spannungsversorgung verbindbar und somit mit elektrischem Strom versorgbar ist. Dabei kann vorgesehen sein, dass eine Datenleitung in die Spannungsversorgungsleitung integriert ist. Dies bedeutet, dass die Übertragung von Signalen und somit Daten über die Spannungsversorgungsleitung erfolgt. Alternativ dazu kann das Bussystem eine dritte Leitung aufweisen, welche als Datenleitung ausgebildet ist. Somit erfolgt die Datenübertragung Übertragung über die von der Spannungsversorgungsleitung separate Datenleitung.

Erfindungsgemäß ist die Adresse des Busteilnehmers im Bussystem mittels der Adressvergabeeinrichtung in Abhängigkeit von dem jeweiligen Verbindungszustand der Kontakte mit in den Leitungen unter Verbindung wenigstens eines der Kontakte mit der entsprechenden, als Spannungsversorgungsleitung ausgebildeten Leitung ermittelbar. Somit wird der zur Spannungsversorgung des Busteilnehmers ohnehin genutzte, wenigstens eine Kontakt für die Adressvergabe verwendet, sodass die Adresse auf besonders einfache Weise zu ermitteln ist. Die Adressvergabe im Bussystem kann somit auf einfache Weise derart realisiert werden, dass bei mehreren Busteilnehmern jeweils wenigstens einer der Kontakte mit der Spannungsversorgungsleitung verbunden ist, während der andere Kontakt ebenso mit der Spannungsversorgungsleitung oder mit einer anderen der Leitungen des Bussystems verbunden oder offen ist. So ist eine einfache Codierungsmethode zur Adressvergabe im Bussystem geschaffen, bei welcher zur Adressvergabe mindestens einer der Kontakte, über die der entsprechende Busteilnehmer mit der Spannungsversorgungsleitung verbindbar ist, bzw. sein Verbindungszustand variiert wird, während bei jedem der Busteilnehmer vorzugsweise einer der jeweiligen Kontakte mit der Spannungsversorgungsleitung verbunden ist.

Ferner ist eine mit den Kontakten gekoppelte Versorgungseinrichtung vorgesehen, mittels welcher eine externe Versorgungsspannung, mit welcher der Busteilnehmer durch Verbinden des wenigstens einen Kontakt mit der Spannungsversorgungsleitung versorgbar ist, in eine interne Versorgungsspannung des Busteilnehmers umwandelbar ist. Zur Adressvergabe werden elektrische Spannungen bzw. Potentiale an den Kontakten ausgewertet, wofür kein Kommunikationsprotokoll erforderlich ist. Je nach Verbindungszustand der Kontakte können die Spannungen an den Kontakten bzw. ein Spannungsunterschied oder ein elektrisches Spannungsverhältnis zwischen den Kontakten variieren. Die Versorgungseinrichtung ermöglicht nun die Umwandlung dieser externen Versorgungsspannung bzw. der jeweiligen, elektrischen Spannungen an den Kontakten in die interne Versorgungsspannung, sodass der Busteilnehmer auch bei unterschiedlichen Verbindungszuständen der Kontakte mit der zumindest im Wesentlichen gleichen, internen Versorgungsspannung versorgt wird und somit betrieben werden kann. Dazu umfasst die Versorgungseinrichtung z. B. interne Dioden oder eine aktive Gleichrichtung mit MOSFETs.

Zur einfachen und unkomplexen Realisierung einer besonders hohen Anzahl an Adressmöglichkeiten ist bei einer weiteren Ausführungsform der Erfindung vorgesehen, dass das Anschlusselement des Busteilnehmers wenigstens einen weiteren Kontakt aufweist, welcher mit einer der Leitungen verbindbar ist, wobei die Adresse des Busteilnehmers im Bussystem mittels der Adressvergabeeinrichtung in Abhängigkeit von dem jeweiligen Verbindungszustand der nun wenigstens drei Kontakte mit den Leitungen ermittelbar ist.

Der zweite Aspekt der Erfindung betrifft ein Bussystem für einen Kraftwagen, mit wenigstens zwei Leitungen und mit wenigstens zwei Busteilnehmern mit jeweils zumindest einem Anschlusselement. Das jeweilige Anschlusselement umfasst jeweils wenigstens zwei Kontakte, die jeweils mit einer der Leitungen verbindbar sind.

Dabei weisen die Busteilnehmer jeweils eine Adressvergabeeinrichtung auf, mittels welcher in Abhängigkeit von einem jeweiligen Verbindungszustand der Kontakte des jeweiligen Busteilnehmers mit den Leitungen eine jeweilige Adresse der Busteilnehmer im Bussystem ermittelbar ist. Vorteilhafte Ausgestaltung des ersten Aspekts der Erfindung sind als vorteilhafte Ausgestaltung des zweiten Aspekts der Erfindung anzusehen und umgekehrt. Bei dem erfindungsgemäßen Bussystem ist es möglich, eine besonders hohe Anzahl an Adressmöglichkeiten auf einfache und unkomplexe und somit kostengünstige Weise zu realisieren.

Erfindungsgemäß ist eine der Leitungen als Spannungsversorgungsleitung ausgebildet, über welche die Busteilnehmer mit elektrischem Strom versorgbar sind. Dabei ist zumindest einer der Kontakte des jeweiligen Busteilnehmers mit der Spannungsversorgungsleitung verbunden. Die Vergabe von unterschiedlichen Adressen erfolgt somit bei den wenigstens zwei Busteilnehmern durch Auswertung des Verbindungszustands des ohnehin zur Spannungsversorgung genutzten Kontakts und somit auf einfache Weise.

Ferner umfasst der jeweilige Busteilnehmer eine mit den jeweiligen Kontakten gekoppelte Versorgungseinrichtung, mittels welcher eine externe Versorgungsspannung, mittels welcher der jeweilige Busteilnehmer durch Verbinden des wenigstens einen jeweiligen Kontakts mit der Verspannungsversorgungsleitung versorgbar ist, in eine interne Versorgungsspannung des Busteilnehmers umwandelbar ist.

Bei mehreren Busteilnehmern ist es vorzugsweise vorgesehen, dass wenigstens einer der Kontakte des jeweiligen Busteilnehmers mit der Spannungsversorgungsleitung verbunden ist. Der entsprechend andere Kontakt kann ebenso bei lediglich einem der Busteilnehmer mit der Spannungsversorgungsleitung verbunden sein, wobei dann bei dem anderen Busteilnehmer oder bei den anderen Busteilnehmern der entsprechend andere Kontakt einen dazu unterschiedlichen Verbindungszustand aufweist, wobei die Busteilnehmer unterschiedliche Kombinationen der Verbindungszustände der jeweiligen Kontakte aufweisen. Somit kann jedem Busteilnehmer eine eindeutige Adresse im Bussystem zugewiesen werden. Im Bussystem ist somit die Vergabe von unterschiedlichen Adressen dadurch realisiert, dass mindestens einer der Kontakte zur Spannungsversorgung variiert wird.

Im Bussystem können auch anderweitige Busteilnehmer kommunizieren, deren Adressen beispielsweise in ihrer Hardware fest vorgegeben sind. Weiterhin ist es möglich, dass in dem Bussystem für jede Hardwarevariante die geschilderte Kodierung erneut verwendet werden kann. Einer ersten Hardwarevariante zugeordnete Busteilnehmer können hierbei die durch die geschilderte Kodierung realisierten Adressmöglichkeiten zusammen mit einer der ersten Hardwarevariante zugeordneten, ersten Kodierungsnummer verwenden. Einer zweiten Hardwarevariante zugeordnete Busteilnehmer können die durch die geschilderte Kodierung realisierten Adressmöglichkeiten zusammen mit einer der zweiten Hardwarevariante zugeordneten, zweiten Kodierungsnummer verwenden. Hierdurch ist eine Vielzahl von unterschiedlichen Adressen auf einfache Weise realisierbar.

Zur Erfindung gehört auch ein Kraftwagen mit wenigstens einem erfindungsgemäßen Busteilnehmer und/oder mit wenigstens einem erfindungsgemäßen Bussystem. Durch die einfache und unkomplexe Adressvergabe lassen sich insbesondere aufgrund von Skaleneffekten bei einer Serienproduktion von Kraftwagen sehr hohe Kostenersparnisse erzielen.

Der dritte Aspekt der Erfindung betrifft ein Verfahren zur Zuordnung von Adressen in einem wenigstens zwei Leitungen aufweisenden und wenigstens zwei Busteilnehmer umfassenden Bussystem, wobei die Busteilnehmer jeweils zumindest ein Anschlusselement umfassen, welche wenigstens zwei Kontakte aufweist, die jeweils mit einer der Leitungen verbindbar sind. Dabei wird den Busteilnehmern eine jeweilige Adresse im Bussystem zugeordnet.

Zur Realisierung einer einfachen und kostengünstigen Adressvergabe ist es vorgesehen, dass die jeweilige Adresse mittels einer Adressvergabeeinrichtung, insbesondere des jeweiligen Busteilnehmers, in Abhängigkeit von einem jeweiligen Verbindungszustand der Kontakte mit den Leitungen ermittelt wird. Vorteilhafte Ausgestaltungen der ersten beiden Aspekte der Erfindung sind als vorteilhafte Ausgestaltung des dritten Aspekts der Erfindung anzusehen und umgekehrt.

Erfindungsgemäß wird die jeweilige Adresse des entsprechenden Busteilnehmers unter Verbindung wenigstens eines der Kontakte des jeweiligen Busteilnehmers mit einer der Leitungen, die als Spannungsversorgungsleitung ausgebildet ist, ermittelt. Somit wird der Verbindungszustand des ohnehin zur Spannungsversorgung des Busteilnehmers genutzten Kontakts verwendet. Zusätzliche Konfigurationskontakte für die Vergabe von eindeutigen Adressen können somit vermieden werden, sodass der Verkabelungsaufwand der Busteilnehmer und des Bussystems gering gehalten werden kann.

Ferner umfasst der jeweilige Busteilnehmer eine mit den jeweiligen Kontakten gekoppelte Versorgungseinrichtung, mittels welcher eine externe Versorgungsspannung, mittels welcher der jeweilige Busteilnehmer durch Verbinden des wenigstens einen jeweiligen Kontakts mit der Spannungsversorgungsleitung versorgt wird, in eine interne Versorgungsspannung des Busteilnehmers umgewandelt wird.

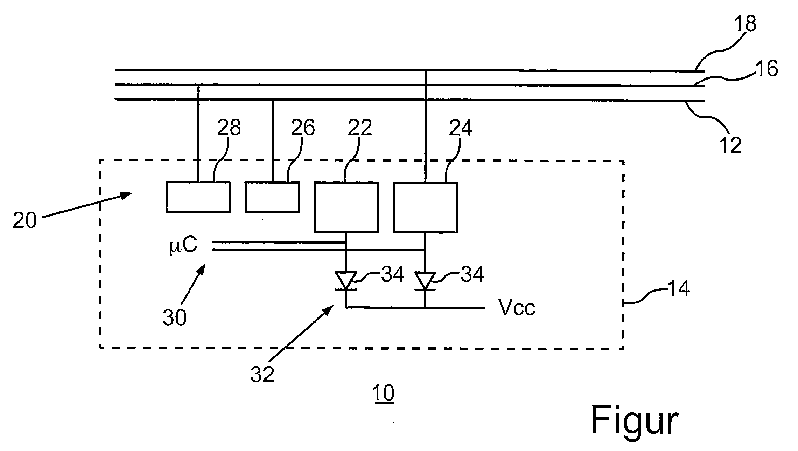

Weitere Vorteile, Merkmale und Einzelheiten der Erfindung ergeben sich aus der nachfolgenden Beschreibung bevorzugter Ausführungsbeispiele sowie anhand der Zeichnung. Die vorstehend in der Beschreibung genannten Merkmale und Merkmalskombinationen sowie die nachfolgend in der Figurenbeschreibung genannten und/oder in der Figur alleine gezeigte Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Die Zeichnung zeigt in der einzigen Figur eine Prinzipdarstellung eines Bussystems, bei welchem Busteilnehmern des Bussystems eindeutige Adressen auf einfache Weisen zugeordnet werden, indem ein jeweiliger Verbindungszustand von zwei Kontakten eines jeweiligen Anschlusselements der Busteilnehmer ausgewertet wird.

Die Figur zeigt ein Bussystem 10 mit drei Leitungen. Eine erste der Leitungen ist eine Datenleitung 12. Die Datenleitung 12 ist vorliegend einem so genannten LIN-Bus (Eindrahtbus) zugeordnet. Das zuvor im Folgenden Geschilderte kann jedoch auch ohne weiteres auf anderweitige Busse wie beispielsweise einen CAN-Bus übertragen werden.

Über die Datenleitung 12 können Busteilnehmer des Bussystems 10 elektrische Signale und somit Daten, welche auch als Botschaften bezeichnet werden, miteinander austauschen und somit miteinander kommunizieren. Von diesen Busteilnehmern ist in der Figur ein Busteilnehmer sehr schematisch dargestellt und mit 14 bezeichnet.

Bei den Busteilnehmern handelt es sich beispielsweise um ein jeweiliges Steuergerät eines beispielsweise als Personenkraftwagen ausgebildeten Kraftwagens. Mittels des jeweiligen Steuergeräts wird wenigstens ein Stellglied des Kraftwagens gesteuert oder geregelt, d. h. angesteuert.

Als zweite Leitung umfasst das Bussystem 10 eine Masseleitung 16, über welche der Busteilnehmer 14 an die Masse anschließbar bzw. angeschlossen ist. Als dritte Leitung umfasst das Bussystem 10 eine Spannungsversorgungsleitung 18, über die die Busteilnehmer mit einem elektrischen Strom versorgt werden.

Wie der Figur zu entnehmen ist, weist der Busteilnehmer 14 ein Anschlusselement 20 mit Kontakten 22, 24, 26, 28 auf. Der erste Kontakt 22 wird auch als Code 1 bezeichnet, da mittels des ersten Kontakts 22 eine Adressvergabe, d. h. eine Codierung des Busteilnehmers 14 erfolgt, sodass der Busteilnehmer 14 eine eindeutige Adresse im Bussystem 10 erhält. Der zweite Kontakt 24 wird auch als Code 2 bezeichnet, da auch der zweite Kontakt 24 zur Adressvergabe verwendet wird. Entsprechend werden auch bei den anderen Busteilnehmern die Kontakte 22, 24 durch Variieren ihrer Verbindungszustände mit den Leitungen verwendet, um den jeweiligen Busteilnehmern eindeutige Adressen zuzuordnen. Dadurch können die Busteilnehmer eindeutig miteinander kommunizieren.

Der dritte Kontakt 26 wird auch als LIN bezeichnet, da der dritte Kontakt 26 mit der dem LIN-Bus zugeordneten Datenleitung 12 verbunden ist. Der vierte Kontakt 28 wird auch als GND (Ground) bezeichnet, da der dritte Kontakt 28 mit der Masseleitung 16 verbunden ist.

Die Masse, d. h. die Masseleitung 16 und der vierte Kontakt 28 sind vorliegend fest vergeben. Dies bedeutet, dass der vierte Kontakt 28 jedes Busteilnehmers mit der Masseleitung 16 verbunden ist. Dementsprechend ist auch der dritte Kontakt 26 jedes Busteilnehmers mit der Datenleitung 12 verbunden. Die Busteilnehmer unterscheiden sich vorliegend lediglich hinsichtlich einer jeweiligen Kombination der Verbindungszustände, d.h. der Verbindung der Kontakte 22, 24 mit den Leitungen, voneinander, wodurch die Vergabe eindeutiger Adressen ermöglicht ist.

Beim Busteilnehmer 14 ist der zweite Kontakt 24 mit der Spannungsversorgungsleitung 18 verbunden, während der erste Kontakt 22 offen ist. Der erste Kontakt 22 weist somit einen ersten Verbindungszustand auf, in welchem der erste Kontakt 22 offen ist. Der zweite Kontakt 24 weist einen zweiten Verbindungszustand auf, in welchem der zweite Kontakt 24 mit der Spannungsversorgungsleitung 18 verbunden ist. Mit den Kontakten 22, 24 ist ein Mikrocontroller µC mit einer Adressvergabeeinrichtung 30 des Busteilnehmers 14 gekoppelt, wobei mittels der Adressvergabeeinrichtung 30 in Abhängigkeit von dem jeweiligen Verbindungszustands der Kontakte 22, 24 eine Adresse des Busteilnehmers 14 ermittelbar ist.

Auch bei den anderen Busteilnehmern ist einer der Kontakte 22, 24 mit der Spannungsversorgungsleitung 18 gekoppelt. Vor dem Hintergrund dieser Randbedingung, dass bei jedem Busteilnehmer wenigstens einer der Kontakte an die Spannungsversorgungsleitung 18 angeschlossen ist, ergeben sich fünf unterschiedliche Adressmöglichkeiten:
Erste Möglichkeit: Code 1 ist mit der Spannungsversorgungsleitung 18 verbunden und Code 2 ist offen.

Zweite Möglichkeit: Code 1 ist mit der Spannungsversorgungsleitung 18 verbunden, Code 2 ist mit der Masseleitung 16 verbunden.

Dritte Möglichkeit: Code 1 ist mit der Spannungsversorgungsleitung 18 verbunden, Code 2 ist mit der Spannungsversorgungsleitung 18 verbunden.

Vierte Möglichkeit: Code 1 ist offen, Code 2 ist mit der Spannungsversorgungsleitung 18 verbunden. Diese vierte Möglichkeit ist bei dem Busteilnehmer 14 realisiert.

Fünfte Möglichkeit: Code 1 ist mit der Masseleitung 16 verbunden, Code 2 ist mit der Spannungsversorgungsleitung 18 verbunden.

Diese fünf Adressmöglichkeiten sind auf einfache Weise realisierbar, indem mindestens einer der Kontakte 22, 24 zur Spannungsversorgung bzw. sein entsprechender Verbindungszustand variiert wird. sodass der Verkabelungsaufwand des Bussystems 10 gering gehalten werden kann und die Busteilnehmer zumindest im Wesentliche identisch ausgebildet werden können. Der dritte Kontakt 26 zur Datenübertragung wird dabei elektrisch nicht beeinflusst.

Ein Steuergerät des Bussystems 10 kann die korrekte Adressvergabe prüfen, indem es alle Busteilnehmer abfragt. Die Busteilnehmer können Fehler erkennen, indem sie die Adresse nach jeder Adressvergabe mit der vorigen vergleichen. Zulässige, d. h. legitime Adressänderungen müssen vom Steuergerät bestätigt werden, nachdem alle Busteilnehmer erkannt worden sind.

Im Bussystem 10 ist es auch beispielsweise möglich, für jede Hardwarevariante von Busteilnehmern die geschilderte Kodierung, d.h. die fünf Adressmöglichkeiten jeweils erneut zu verwenden und mit wenigstens einer, beispielsweise in der jeweiligen Hardwarevariante festgelegten, Kodierungsnummer zu kombinieren. Sind als einer ersten Hardwarevariante zugeordnete Busteilnehmer beispielsweise fünf Sperrventile, als einer zweiten Hardwarevariante zugeordnete Busteilnehmer fünf Umschaltventile und als ein, einer dritten Hardwarevariante zugeordneter Busteilnehmer eine Pumpe vorgesehen, so ist der der ersten Hardwarevariante, d.h. den Sperrventilen eine erste Kodierungsnummer, der zweiten Hardwarevariante, d.h. den Umschaltventilen eine von der ersten Kodierungsnummer unterschiedliche, zweite Kodierungsnummer und der dritten Hardwarevariante, d.h. der Pumpe eine von der ersten und von der zweiten Kodierungsnummer unterschiedliche, dritte Kodierungsnummer zugeordnet.

Für die Sperrventile können dann die oben genannten, fünf Adressmöglichkeiten zusammen mit der für alle Sperrventile gleichen, ersten Kodierungsnummer als Adressen verwendet werden. Entsprechend können für die Umschaltventile die oben genannten, fünf Adressmöglichkeiten zusammen mit der für alle Umschaltventile gleichen, zweiten Kodierungsnummer als Adressen verwendet werden. Für die Pumpe kann die dritte Kodierungsnummer als Adresse verwendet werden. So können elf voneinander unterschiedliche Adressen im Bussystem 10 auf einfache Weise realisiert werden.

Zur Realisierung einer noch größeren Anzahl an Adressmöglichkeiten auf sehr einfache Weise ist es beispielsweise möglich, auch die Datenleitung 12 in die Variation der Verbindungszustände der Kontakte 22, 24 mit einzubeziehen, d. h. die Kontakte 22, 24 wahlweise auch mit der Datenleitung 12 zu verbinden oder offen zu lassen. Zusätzlich zu den zuvor geschilderten, fünf Adressmöglichkeiten ergeben sich dann zwei zusätzliche Adressmöglichkeiten, sodass sich die Anzahl an Adressmöglichkeiten auf sieben erhöht:
Sechste Möglichkeit ist: Code 1 ist mit der Datenleitung 12 verbunden, Code 2 ist mit der Spannungsversorgungsleitung 18 verbunden.

Siebte Möglichkeit: Code 1 ist mit der Spannungsversorgungsleitung 18 verbunden, Code 2 ist mit der Datenleitung 12 verbunden.

Eine weitere Möglichkeit sieht vor, die Masseleitung 16 und die Datenleitung 12 zusätzlich zur Spannungsversorgungsleitung 18 oder anstelle dieser für die Adressvergabe, d. h. die Codierung zu verwenden.

Daraus ist es ersichtlich, dass die Adressvergabe intern in den Busteilnehmer mittels der Adressvergabeeinrichtung 30 erfolgt, indem die Kontakte 22, 24 auf ihre Verbindungszustände überprüft werden.

Der Busteilnehmer 14 umfasst darüber hinaus eine Versorgungseinrichtung 32 mit zwei internen Dioden 34, welche mit den Kontakten 22, 24 zur Spannungsversorgung verbunden sind. Mittels der Versorgungseinrichtung 32 ist eine externe Versorgungsspannung, mit welcher der Busteilnehmer 14 durch Verbinden wenigstens eines der Kontakte 22, 24 mit der Spannungsversorgungsleitung 18 versorgbar ist, in eine interne Versorgungsspannung Vcc des Busteilnehmers umwandelbar, sodass die interne Versorgungsspannung Vcc gewonnen wird und der Busteilnehmer 14 betrieben werden kann. So ist es möglich, bei den Busteilnehmern trotz unterschiedlicher Verbindungszustände der Kontakte 22, 24 insgesamt die Busteilnehmer mit der zumindest im Wesentlichen gleichen, internen Versorgungsspannung Vcc zu versorgen.

Durch die einfache Adressvergabe durch Auswerten der Verbindungszustände der Kontakte 22, 24 können die Busteilnehmer im Wesentlichen gleich ausgebildet sein und so eine sehr große Anzahl an Gleichteilen umfassen, was zu Kosteneinsparungen führt.

## Patentansprüche

1. Busteilnehmer (14) für ein wenigstens zwei Leitungen (12, 16, 18) aufweisendes Bussystem (10), mit zumindest einem Anschlusselement (20), welches wenigstens zwei Kontakte (22, 24) aufweist, die jeweils mit einer der Leitungen (12, 16, 18) verbindbar sind, und mit einer Adressvergabeeinrichtung (30), mittels welcher in Abhängigkeit von einem jeweiligen Verbindungszustand der Kontakte (22, 24) mit den Leitungen (12, 16, 18) eine Adresse des Busteilnehmers (14) im Bussystem (10) ermittelt wird, wobei die Adresse des Busteilnehmers (14) im Bussystem (10) mittels der Adressvergabeeinrichtung (30) in Abhängigkeit von dem jeweiligen Verbindungszustand der Kontakte (22, 24) mit den Leitungen (12, 16, 18) unter Verbindung wenigstens eines der Kontakte (22, 24) mit einer der Leitungen (12, 16, 18), die als Spannungsversorgungsleitung (18) ausgebildet ist, ermittelt wird, **dadurch gekennzeichnet, dass** eine mit den Kontakten (22, 24) gekoppelte Versorgungseinrichtung (32) vorgesehen ist, mittels welcher eine externe Versorgungsspannung, mit welcher der Busteilnehmer (14) durch Verbinden des wenigstens einen Kontakts (24) mit der Spannungsversorgungsleitung (18) versorgbar ist, in eine interne Versorgungsspannung (Vcc) des Busteilnehmers (14) umgewandelt wird.

2. Busteilnehmer (14) nach Anspruch 1,
**dadurch gekennzeichnet, dass**
das Anschlusselement (20) des Busteilnehmers (14) wenigstens einen weiteren Kontakt (26, 28) aufweist, welcher mit einer der Leitungen (12, 16, 18) verbindbar ist, wobei die Adresse des Busteilnehmers (14) im Bussystem (10) mittels der Adressvergabeeinrichtung (30) in Abhängigkeit von dem jeweiligen Verbindungszustand der Kontakte (22, 24, 26, 28) mit den Leitungen (12, 16, 18) ermittelbar ist.

3. Bussystem (10) für einen Kraftwagen, mit wenigstens zwei Leitungen (12, 16, 18) und mit wenigstens zwei Busteilnehmern (14) nach Anspruch 1 oder 2,
**dadurch gekennzeichnet, dass**
eine der Leitungen (12, 16, 18) als Spannungsversorgungsleitung (18) ausgebildet ist, wobei zumindest einer der Kontakte (22, 24) des jeweiligen Busteilnehmers (14) mit der Spannungsversorgungsleitung (18) verbunden ist, wobei der jeweilige Busteilnehmer (14) eine mit den jeweiligen Kontakten (22, 24) gekoppelte Versorgungseinrichtung (32) umfasst, mittels welcher eine externe Versorgungsspannung, mit welcher der jeweilige Busteilnehmer (14) durch Verbinden des wenigstens einen jeweiligen Kontakts (24) mit der Spannungsversorgungsleitung (18) versorgbar ist, in eine interne Versorgungsspannung (Vcc) des Busteilnehmers (14) umgewandelt wird.

4. Kraftwagen mit wenigstens einem Busteilnehmer (14) nach Anspruch 1 oder 2 und/oder mit wenigstens einem Bussystem (10) nach Anspruch 3.

5. Verfahren zur Zuordnung von Adressen in einem wenigstens zwei Leitungen (12, 16, 18) aufweisenden und wenigstens zwei Busteilnehmer (14) umfassenden Bussystem (10), wobei die Busteilnehmer (14) jeweils zumindest ein Anschlusselement (20) umfassen, welches wenigstens zwei Kontakte (22, 24) aufweist, die jeweils mit einer der Leitungen (12, 16, 18) verbindbar sind, wobei den Busteilnehmern (14) eine jeweilige Adresse im Bussystem (10) zugeordnet wird, und wobei die jeweilige Adresse mittels einer jeweiligen Adressvergabeeinrichtung (20) der Busteilnehmer (14) in Abhängigkeit von einem jeweiligen Verbindungszustand der Kontakte (22, 24) mit den Leitungen (12, 16, 18) ermittelt wird, wobei die jeweilige Adresse des entsprechenden Busteilnehmers (14) unter Verbindung wenigstens eines der Kontakte (22, 24) des jeweiligen Busteilnehmers (14) mit einer der Leitungen (12, 16, 18), die als Spannungsversorgungsleitung (18) ausgebildet ist, ermittelt wird, **dadurch gekennzeichnet, dass** der jeweilige Busteilnehmer (14) eine mit den jeweiligen Kontakten (22, 24) gekoppelte Versorgungseinrichtung (32) umfasst, mittels welcher eine externe Versorgungsspannung, mit welcher der jeweilige Busteilnehmer (14) durch Verbinden des wenigstens einen jeweiligen Kontakts (24) mit der Spannungsversorgungsleitung (18) versorgt wird, in eine interne Versorgungsspannung (Vcc) des Busteilnehmers (14) umgewandelt wird.

## Claims

1. Bus subscriber (14) for a bus system (10) having at least two lines (12, 16, 18), comprising at least one connection element (20) that has at least two contacts (22, 24) that can each be connected to one of the lines (12, 16, 18), and an address allocation device (30) to determine an address for the bus subscriber (14) in the bus system (10) based on the respective connection states of the contacts (22, 24) with respect to the lines (12, 16, 18), wherein the address of the bus subscriber (14) in the bus system (10) is detected using the address allocation device (30) based on the respective connection states of the contacts (22, 24) with respect to the lines (12, 16, 18), wherein at least one of the contacts (22, 24) is connected to one of the lines (12, 16, 18) that is configured as a power supply line (18), **characterized in that** a supply device (32) coupled to the contacts (22, 24) is provided to convert an external supply voltage, supplied to the bus subscriber (14) by connection of the at least one contact (24) to the power supply line (18), into an internal supply voltage (Vcc) of the bus subscriber (14).

2. Bus subscriber (14) according to claim 1,
**characterized in that**
the connection element (20) of the bus subscriber (14) comprises at least one further contact (26, 28) that can be connected to one of the lines (12, 16, 18), wherein the address of the bus subscriber (14) in the bus system (10) is detected using the address allocation device (30) based on the respective connection states of the contacts (22, 24, 26, 28) with respect to the lines (12, 16, 18).

3. Bus system (10) for a motor vehicle, comprising at least two lines (12, 16, 18) and at least two bus subscribers (14) according to claim 1 or 2,
**characterized in that**
one of the lines (12, 16, 18) is a power supply line (18), wherein at least one of the contacts (22, 24) of the respective bus subscriber (14) is connected to the power supply line (18), wherein each respective bus subscriber (14) comprises a supply device (32) coupled to the respective contacts (22, 24) for converting an external supply voltage, supplied to the bus subscriber (14) by connection of the at least one contact (24) to the power supply line (18), into an internal supply voltage (Vcc) of the bus subscriber (14).

4. Motor vehicle with at least one bus subscriber (14) according to claim 1 or 2 and/or with at least one bus system (10) according to claim 3.

5. Method for allocating addresses in a bus system (10) that has at least two lines (12, 16, 18) and at least two bus subscribers (14), the bus subscribers (14) each comprising at least one connection element (20) that has at least two contacts (22, 24) that can each be connected to one of the lines (12, 16, 18), wherein a respective address in the bus system (10) is allocated to each bus subscriber (14), the respective address being determined by an address allocation device (20) provided in each bus subscriber (14) based on the respective connection states of the contacts (22, 24) with respect to the lines (12, 16, 18), wherein the respective address of the respective bus subscriber (14) is detected by connecting at least one of the contacts (22, 24) of the respective bus subscriber (14) to one of the lines (12, 16, 18) that is configured as a power supply line (18), **characterized in that** each bus subscriber (14) comprises a supply device (32) coupled to the respective contacts (22, 24) for converting an external supply voltage, supplied to the bus subscriber (14) by connection of the at least one contact (24) to the power supply line (18), into an internal supply voltage (Vcc) of the bus subscriber (14).

## Revendications

1. Abonné de bus (14) pour un système de bus (10) présentant au moins deux lignes (12, 16, 18), comprenant au moins un élément de connexion (20), qui présente au moins deux contacts (22, 24), qui peuvent être raccordés respectivement à l'une des lignes (12, 16, 18), et comprenant un dispositif d'attribution d'adresses (30), au moyen duquel une adresse de l'abonné de bus (14) dans le système de bus (10) est déterminée en fonction d'un état de raccordement respectif des contacts (22, 24) aux lignes (12, 16, 18),
dans lequel l'adresse de l'abonné de bus (14) dans le système de bus (10) est déterminée au moyen du dispositif d'attribution d'adresses (30) en fonction de l'état de raccordement respectif des contacts (22, 24) aux lignes (12, 16, 18) en raccordant au moins l'un des contacts (22, 24) à l'une des lignes (12, 16, 18), qui est réalisée sous la forme d'une ligne d'alimentation en tension (18), **caractérisé en ce**
**qu'**un dispositif d'alimentation (32) couplé aux contacts (22, 24) est prévu, au moyen duquel une tension d'alimentation externe, avec laquelle l'abonné de bus (14) peut être alimenté en raccordant l'au moins un contact (24) à la ligne d'alimentation en tension (18), est transformée en une tension d'alimentation (Vcc) interne de l'abonné de bus (14).

2. Abonné de bus (14) selon la revendication 1,
**caractérisé en ce**
**que** l'élément de connexion (20) de l'abonné de bus (14) présente au moins un autre contact (26, 28), qui peut être raccordé à l'une des lignes (12, 16, 18), dans lequel l'adresse de l'abonné de bus (14) dans le système de bus (10) peut être déterminée au moyen du dispositif d'attribution d'adresses (30) en fonction de l'état de raccordement respectif des contacts (22, 24, 26, 28) aux lignes (12, 16, 18).

3. Système de bus (10) pour un véhicule à moteur, comprenant au moins deux lignes (12, 16, 18) et comprenant au moins deux abonnés de bus (14) selon la revendication 1 ou 2,
**caractérisé en ce**
**que** l'une des lignes (12, 16, 18) est réalisée sous la forme d'une ligne d'alimentation en tension (18), dans lequel au moins un des contacts (22, 24) de l'abonné de bus (14) respectif est raccordé à la ligne d'alimentation en tension (18), dans lequel l'abonné de bus (14) respectif comprend un dispositif d'alimentation (32) couplé aux contacts (22, 24) respectifs, au moyen duquel une tension d'alimentation externe, à l'aide de laquelle l'abonné de bus (14) respectif peut être alimenté en raccordant l'au moins un contact (24) respectif à la ligne d'alimentation en tension (18), est transformée un en une tension d'alimentation (Vcc) interne de l'abonné de bus (14).

4. Véhicule à moteur comprenant au moins un abonné de bus (14) selon la revendication 1 ou 2 et/ou comprenant au moins un système de bus (10) selon la revendication 3.

5. Procédé servant à attribuer des adresses dans un système de bus (10) présentant au moins deux lignes (12, 16, 18) et comprenant au moins deux abonnés de bus (14), dans lequel les abonnés de bus (14) comprennent respectivement au moins un élément de connexion (20), qui présente au moins deux contacts (22, 24), qui peuvent être raccordés respectivement à l'une des lignes (12, 16, 18), dans lequel une adresse respective dans le système de bus (10) est attribuée aux abonnés de bus (14), et dans lequel l'adresse respective est déterminée au moyen d'un dispositif d'attribution d'adresses (20) respectif des abonnés de bus (14) en fonction d'un état de raccordement respectif des contacts (22, 24) aux lignes (12, 16, 18),
dans lequel l'adresse respective de l'abonné de bus (14) correspondant est déterminée en raccordant au moins l'un des contacts (22, 24) de l'abonné de bus (14) respectif à l'une des lignes (12, 16, 18), qui est réalisée sous la forme d'une ligne d'alimentation en tension (18), **caractérisé en ce que** l'abonné de bus (14) respectif comprend un dispositif d'alimentation (32) couplé aux contacts (22, 24) respectifs, au moyen duquel une tension d'alimentation externe, à l'aide de laquelle l'abonné de bus (14) respectif est alimenté en raccordant l'au moins un contact (24) respectif à la ligne d'alimentation en tension (18), est transformée en une tension d'alimentation (Vcc) interne de l'abonné de bus (14).
